# EUROPÄISCHE PATENTSCHRIFT

(11) **EP 0 442 271 B1**
(45) Veröffentlichungstag und Bekanntmachung des Hinweises auf die Patenterteilung: **24.05.1995**
(21) Anmeldenummer: 91100447.1
(22) Anmeldetag: 16.01.1991
(51) Int. Cl.: C09D 9/00

(54) **Mittel zur Lackentfernung**
Paint remover
Décapant pour peinture

(30) Priorität: 15.02.1990 DE 4004630
(43) Veröffentlichungstag der Anmeldung: 21.08.1991
(73) Patentinhaber: Beutelrock, Carolin, D-23552 Lübeck (DE)
(72) Erfinder: Beutelrock, Friedrich Volker, W-2000 Hamburg 73 (DE)
(74) Vertreter: Weber, Dieter, Dr.

(56) Entgegenhaltungen:
- EP-A- 0 081 355
- US-A- 4 744 834
- RESEARCH DISCLOSURE. no. 273, Januar 1987, HAVANT GB Seite 38 anonymous:"Organo-soluble hydroxypropyl methylcellulose ethers useful as thickenersforpaint strippers"

## Beschreibung

In vielen Städten, insbesondere in Großstädten, treten in zunehmendem Maße auf öffentlichten und privaten Bauwerken sowie Fahrzeugen, insbesondere Eisenbahn- und Untergrundbahnwagen, Lackbesprühungen, sogenanne "Grafitti", auf. Obwohl die Grafitti sich einerseits zu einer selbständigen Kunstform entwickelt haben und vielfach zur optischen Gestaltung trister urbaner Betonlandschaften erwünscht sind, finden sich andererseits in den Städten überwiegend kunstlose Schmierereien sowie politische und soziale Parolen, die als Beschmutzung des Stadtbildes empfunden werden. Zur Entfernung solcher Lackbesprühungen aus Sprühdosen müssen die öffentliche Hand und private Hausbesitzer jährlich große Summen aufwenden, um Bauwerke und Eisenbahn- und Untergrundbahnwagen in den ursprünglichen Zustand zu versetzen, wobei durch das Eindringen der Sprühlacke in Oberflächenporen an Bauwerken oftmals sogar unreparierbare Schäden entstehen, die nur durch kostspielige Anstriche beseitigt werden können, durch die ihrerseits der optische Eindruck eines Gebäudes vielfach leidet.

Zur Entfernung von Lackbesprühungen auf Bauten oder Eisenbahn- oder Untergrundbahnwagen werden verschiedene handelsübliche Reinigungsmittel verwendet, doch sind diese durchwegs schlecht wirksam und hinterlassen Farbrückstände, die kostenaufwendig überstrichen werden müssen, oder aber die Reinigungsmittel enthalten flüchtige organische Lösungsmittel, die beim Einatmen zu Gesundheitsschäden führen können.

Die US-A-4 744 834 beschreibt ein Lösemittel zur Entfernung von Photoresisten bei der Herstellung gedruckter Schaltungen und Halbleitereinrichtungen. Diese Lösemittel enthalten 50 bis 80 Gew.-% einer 2-Pyrrolidinonverbindung, 15 bis 30 Gew.-% eines Diethylenglycolmonoalkylethers, 1 bis 10 Gew.-% eines Polyglycols und 0,5 bis 4 Gew.-% einer quaternären Ammoniumverbindung. Je 100 Gewichtsteile Diethylenglycolmonoalkylether + Polyglycol sind also mindestens 25 Gewichtsteile Pyrrolidinonverbindung enthalten.

Die der Erfindung zugrundeliegende Aufgabe bestand somit darin, ein Mittel zur Lackentfernung unter Mitverwendung von Wasser zu bekommen, das erhöhte Wirksamkeit besitzt und keine Gesundheitsgefährdung verursachen kann. Das erfindungsgemäße Mittel, das
a) ein Di-, Tri- und/oder Tetraethylenglycol und/oder Dipropylenglycol und/oder wenigstens einen C₁₋₄-Mono- oder C₁₋₄-Diether und/oder Mono- oder Diessigsäureester und/oder C₁₋₄-Monoetheressigsäureester hiervon und
b N-Methyl-2-pyrrolidon enthält und im wesentlichen wasserfrei ist, ist derart gekennzeichnet, daß es je 150 Gewichtsteile der Komponente a) 3 bis 12 Gewichtsteile N-Methyl-2-pyrrolidon und außerdem
c) 0,5 bis 5 Gewichtsteile eines Tensids enthält.

Solche Gemische erwiesen sich als äußerst wirksam zur Entfernung von Lackfarbenbesprühungen auch von porösen, insbesondere aber von glatten Substraten, beispielsweise solchen, deren Poren durch ein Beschichtungsmittel verschlossen wurden.

Die erfindungsgemäßen Mittel sind dünnflüssig und mit Wasser verdünnbar, obwohl sie im wesentlichen wasserfrei sind. Bei der Anwendung werden sie auf den für die Lackentfernung vorgesehenen Bereich des Substrates aufgetragen. Nach kurzer Einwirkungszeit, wie beispielsweise nach 1 min, lassen sich die angelösten oder angequollenen Lackfarben mit Wasser, gegebenenfalls unter Zuhilfenahme von Schwämmen oder Bürsten, abspülen. Der Auftrag des Mittels kann durch Aufsprühen, Aufbürsten oder auf andere übliche Weise erfolgen.

Das erfindungsgemäße Mittel reagiert neutral und greift daher die Substrate nicht an. Es enthält biologisch abbaubare Bestandteile und ist weder gesundheitsschädlich, noch haut- oder schleimhautreizend und läßt sich bei Berührung mit der Haut von dieser leicht mit Wasser abspülen.

Unter den Komponenten a) sind insbesondere die Monoether von Diethylenglycol oder Dipropylenglycol bevorzugt, besonders der Monomethylether oder Monoethylether von Diethylenglycol.

Als Tenside kommen im Prinzip alle in Betracht, die eine ausreichende oberflächenaktive Wirkung besitzen, nämlich anionische, kationische oder nichtionische Tenside. Besonders bevorzugt sind anionische und/oder nichtionische Tenside. Beispiele anionischer Tenside, die hier in Betracht kommen, sind Seifen, Carboxylate, Sulfonate und Sulfate mit Alkyl- bzw. Alkylarylresten, wie Alkylbenzolsulfonat. In Betracht kommende nichtionische Tenside sind beispielsweise Ether, insbesondere Polyglycolether mit Alkoxy-, Alkylaryloxy-, Alkylamino-, Acyloxy-, Acylamino-, Acyl- und Alkylresten, wie insbesondere Fettalkoholpolyglycolether. Die Mengenverhältnisse der Komponenten a) bis c) können je nach Anwendungszweck durch Reihenversuche leicht optimal eingestellt werden. Zweckmäßige Mengenverhältnisse liegen bei vorzugsweise 6 bis 10 Gewichtsteilen der Komponente b) und bei vorzugsweise 2 bis 4 Gewichtsteilen der Komponente c) je 100 Gewichtsteile der Komponente a).

Da bei der Grafittientfernung häufig mehr oder weniger senkrechte Flächen gereinigt werden müssen, auf denen dünnflüssige Reinigungsmittel ablaufen, so daß sich die Einwirkungszeit verkürzt, ist es zweckmäßig, dem Mittel ein Verdickungsmittel zuzusetzen, das die Gesamtmischung pastös oder gelartig macht und so auch auf senkrechten Flächen haften läßt, so daß die Einwirkungszeit beliebig gewählt werden kann. Solche Verdickungsmittel müssen, da die Reinigungsmittel nach der Erfindung im wesentlichen wasserfrei sind, organischer Natur sein und können beispielsweise Agar-Agar, Carrageen, Tragant, Gummi arabicum, Alginate, Pektine, Polyosen, Guar-Mehl, Johannisbrotbaumkernmehl, Stärke, Dextrine, Gelatine, Casein, Carboxymethylcellulose, Celluloseether, Polyacryl- und Polymethacrylverbindungen, Vinylpolymere, Polycarbonsäuren, Polyether, Polyimine oder Polyamide sein. Da diese Verdickungsmittel einerseits in der Komponente a) löslich sein sollen und andererseits mit Wasser abwaschbar sein sollen, werden bevorzugt als Verdickungsmittel Hydroxy-C₁₋₄-alkylcellulosen, insbesondere Hydroxypropylcellulose oder Hydroxyethylcellulose verwendet. Dieses Verdickungsmittel wird vorzugsweise in einer Menge von 0,5 bis 5, besonders in einer Menge von 1 bis 3 Gewichtsteilen der 100 Gewichtsteile der Komponente a) eingesetzt. Solchermaßen verdickte Lackentfernungsmittel nach der Erfindung besitzen gelartigen Charakter und haften während der Einwirkungszeit gut an senkrechten Flächen.

Zusätzlich können die Mittel noch übliche Bestandteile enthalten, die mit den obengenannten Bestandateilen verträglich sind, wie Geruchsstoffe, z. B. Terpene, Pigmente oder Farbstoffe.

### Beispiele

### Beispiel 1

Folgende Bestandteile wurden homogen miteinander vermischt:

| | |
|---|---|
| Methyldiglycol (2-(2-Methoxyethoxy)-ethanol) | 82,8 Gewichtsteile |
| N-Methyl-2-pyrrolidon | 6,8 Gewichtsteile |
| Orangenterpene | 8,0 Gewichtsteile |
| handelsübliches Tensidgemisch anionischer und nichtionischer Tenside | 2,4 Gewichtsteile |

Die Mischung wurde auf der Außenwand eines mit Grafitti besprühten Eisenbahnwagens gleichmäßig aufgesprüht. Nach einer Einwirkungszeit von 1 min wurde unter Zuhilfenahme einer Bürste und unter Abspritzen mit reichlich Wasser der Lackfarbenauftrag entfernt. Es blieben keine Farbreste zurück. Die Wagenwand wurde durch das Reinigungsmittel nicht angegriffen.

### Beispiel 2

Ein Gemisch wurde aus folgenden Bestandteilen hergestellt:

| | |
|---|---|
| Methyldiglycol | 81,6 Gewichtsteile |
| N-Methyl-2-pyrrolidon | 6,7 Gewichtsteile |
| Orangenterpene | 7,9 Gewichtsteile |
| Hydroxypropylcellulose | 1,4 Gewichtsteile |
| Tensidgemisch wie in Beispiel 1 | 2,4 Gewichtsteile |

Zunächst wurden die Bestandteile ohne Hydroxypropylcellulose innig miteinander vermischt. Sodann ließ man bei laufendem Schnellrührer die Hydroxypropylcellulose langsam zulaufen. Es wurde so lange gemischt, bis eine klare klumpenfreie Lösung entstanden war. Die Lösung wurde über Nacht stehengelassen und dann abgefüllt. Sie hatte gelartigen Charakter und haftete auf der zu reinigenden senkrechten Fläche des Eisenbahnwagens gut. Wie im Beispiel 1 ergab das Abspülen mit Wasser nach einer Einwirkungszeit von 1 bis 2 min eine von Farbspuren freie Fläche, die keinerlei Beschädigungen zeigte.

## Patentansprüche

1. Mittel zur Lackentfernung unter Mitverwendung von Wasser, das
a) ein Di-, Tri- und/oder Tetraethylenglycol und/oder Dipropylenglycol und/oder wenigstens einen C₁₋₄-Mono- oder C₁₋₄-Diether und/oder Mono- oder Diessigsäureester und/oder C₁₋₄-Monoetheressigsäureester hiervon und
b) N-Methyl-2-pyrrolidon
enthält und im wesentlichen wasserfrei ist, **dadurch gekennzeichnet**, daß es je 100 Gewichtsteile der Komponente a) 3 bis 12 Gewichtsteile N-Methyl-2-pyrrolidon und außerdem
c) 0,5 bis 5 Gewichtsteile eines Tensids
enthält.

2. Mittel nach Anspruch 1, **dadurch gekennzeichnet**, daß es
d) ein Verdickungsmittel, vorzugsweise eine Hydroxy-C₁₋₄-alkylcellulose, insbesondere Hydroxypropylcellulose oder Hydroxyethylcellulose,
enthält.

3. Mittel nach Anspruch 1 oder 2, **dadurch gekennzeichnet**, daß es je 100 Gewichtsteile der Komponente a) 6 bis 10 Gewichtsteile der Komponente b) und 2 bis 4 Gewichtsteile der Komponente c) enthält.

4. Mittel nach einem der Ansprüche 1 bis 3, **dadurch gekennzeichnet**, daß es als Tensid ein anionisches und/oder nichtionisches Tensid enthält.

5. Mittel nach einem der Ansprüche 2 bis 4, **dadurch gekennzeichnet**, daß es je 100 Gewichtsteile der Komponente a) 0,5 bis 5, vorzugsweise 1 bis 3 Gewichtsteile der Komponente d) enthält.

## Claims

1. Agent for removing paints by use of water, containing
a) a di, tri and/or tetraethylene glycol and/or dipropylene glycol and/or at least one C₁₋₄-mono or C₁₋₄-diether and/or mono oder diacetic acid ester and/or C₁₋₄ monoether acetic acid ester thereof and
b) N-methyl-2-pyrrolidone
and being substantially free from water, **characterized in** that per hundred parts by weight of the component a) it contains 3 to 12 party by weight of N-methyl-2-pyrrolidone and additionally
c) 0.5 to 5 parts by weight of a tenside.

2. Agent according to claim 1, **characterized in** that it contains
d) a thickening agent, preferably a hydroxy-C₁₋₄ alkyl cellulose, especially hydroxy propyl cellulose or hydroxy ethyl cellulose.

3. Agent according to claim 1 or 2, **characterized in** hat per hundred parts by weight of the component a) it contains 6 to 10 parts by weight of the component b) and 2 to 4 parts by weight of the component c).

4. Agent according to one of the claims 1 to 3, **characterized in** that it contains as tenside an anionic and/oder non-ionic tenside.

5. Agent according to one of the claims 2 to 4, **characterized in** that per hundred parts by weight of the component a) it contains 0,5 to 5, preferably 1 to 3 parts by weight of the component d).

## Revendications

1. Décapant pour peinture, produit pour enlever, avec co-utilisation de l'eau, un vernis ou une laque, ce produit contenant :
a) un di-, tri- et/ou tétra-éthylène glycol et/ou du dipropylène glycol et/ou au moins un monoéther on C₁-C₄ ou un diéther en C₁-C₄, et/ou un monoester ou un diester d'acide acétique et/ou un monoéther (en C₁-C₄)-ester d'acide acétique qui en dérive, et
b) de la N-méthyl-2-pyrolidone, produit essentiellement dépourvu d'eau et qui est caractérisé en ce qu'il contient pour 100 parties en poids du constituant (a) 3 à 12 parties on poids de N-méthyl-2-pyrolidone, et, en outre,
c) 0,5 à 5 parties en poids d'un tensio-actif.

2. Produit selon la revendication 1, caractérisé en ce qu'il contient
d) un épaississant, avantageusement une hydroxy-alkyl (en C₁-C₄)-cellulose, notamment de l'hydroxypropylcellulose ou de l'hydroxyéthylcellulose

3. Produit selon la revendication 1 ou 2, caractérisé en ce qu'il contient, pour 100 parties en poids du composant (a), 6 à 10 parties en poids du composant (b) et 2 à 4 parties en poids du composant (c).

4. Produit selon l'une des revendications 1 à 3, caractérisé en ce qu'il contient comme tensio-actif un tensio-actif anionique et/ou un tensio-actif non ionique.

5. Produit selon l'une des revendications 2 à 4, caracterise en ce qu'il contient, pour 100 parties en poids du composant (a), 0,5 à 5, avantageusement 1 à 3 parties en poids du composant (d).
